# EUROPEAN PATENT SPECIFICATION

(11) **EP 2 879 920 B1**
(45) Date of publication and mention of the grant of the patent: **08.04.2020**
(21) Application number: 12741030.6
(22) Date of filing: 02.08.2012
(51) Int. Cl.: B60S 1/38, B60S 1/52

(54) **WINDSCREEN WIPER DEVICE**
SCHEIBENWISCHERVORRICHTUNG
DISPOSITIF D'ESSUIE-GLACE POUR PARE-BRISE

(43) Date of publication of application: 10.06.2015
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2012/065197
(87) International publication number: WO 2014/019627

(56) References cited:
- DE-A1- 10 000 372
- DE-A1- 10 025 630
- DE-A1- 10 053 686
- DE-A1- 19 612 133
- DE-A1-102008 042 405
- FR-A1- 2 704 817
- US-A- 5 784 751
- US-A1- 2011 047 738

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes one central groove, in which groove a longitudinal strip of the carrier element is disposed, which windscreen wiper device comprises a connecting device for an oscillating arm, wherein said oscillating arm can be pivotally connected to said connecting device about a pivot axis near one end, and wherein said wiper blade includes a wiping lip at a side of said central groove facing towards a windscreen to be wiped. Such a windscreen wiper device is generally known. The prior art windscreen wiper device is in particular designed as a "flat blade" or "yokeless blade", wherein use is no longer made of several yokes pivotally connected to each other, but wherein the wiper blade is biased by the carrier element, as a result of which it exhibits a specific curvature. One drawback of the prior art windscreen wiper device is the fact that a windscreen to be wiped is often not cleaned effectively during one or more so-called "spray cycle(s)", i.e. when a driver sprays water onto a windscreen of his vehicle and windscreen wiper devices thereof, whether or not activated automatically thereupon, subsequently wipe said windscreen once or twice, particularly in case said windscreen is covered with dirt like insects and the DE-A-10053686 or DE-A-102008042405 show the preambles of claims 1 and 5.

The object of the invention is to overcome this drawback of the prior art as indicated above, in particular to provide a windscreen wiper device which allows a windscreen to be wiped effectively at all times.

In order to accomplish that objective, a windscreen wiper device of the kind referred to in the introduction is characterized according to claim 1. In other words, said wiper blade - including any spoiler, said wiping lip, said channel and said holes - is made in one piece of elastomeric material, such as rubber, preferably using an extrusion operation. No use is made of separate constructional elements, such as spraying nozzles and/or a single channel of a different material. According to the invention said cleaning fluid channel is made inside said elastomeric material by providing a longitudinal groove or slit therein, particularly through extrusion. Realizing said cleaning fluid channel inside said elastomeric material of said wiper blade has the advantage that, in case of frost, the elastomeric material around said cleaning fluid channel may easily compensate an expansion in volume of frozen water inside said cleaning fluid channel. Further, said elastomeric material is not sensitive to any creep, has a good chemical resistance to any chemicals present in the cleaning fluid, and does not show any deformation as a result of a sudden impact.

Said holes extending obliquely in downward direction from said cleaning fluid channel to the outside, i.e. enclosing a sharp angle with the horizontal, has the advantage that the cleaning fluid is uniformly spread over a windscreen to be wiped, while using less cleaning fluid, even at low fluid pressure. Due to the fact that during operation the cleaning fluid exits said holes on said wiper blade at a short distance from a windscreen to be wiped, a period of time between spraying the cleaning fluid on a windscreen to be wiped and subsequently wiping the sprayed cleaning fluid away by the windscreen wiper device(s), is considerably reduced. As a result thereof, better visibility during a so- called "spray cycle" or "wash cycle" is obtained, whereas any negative effect of a high vehicle speed on wiping properties are reduced as well.

Said wiper blade is preferably made in one piece of elastomeric material through an extrusion process, wherein said holes are preferably made in an extra process step after extruding said wiper blade.

Particularly, two cleaning fluid channels are provided for, wherein the one cleaning fluid channel is located inside said downstream sidewall of said central groove, and wherein the other cleaning fluid channel is located inside an upstream sidewall of said central groove. More in particular, said holes are provided at said downstream sidewall and at said upstream sidewall of said central groove.

In another preferred embodiment of a windscreen wiper device according to the invention said
cleaning fluid channel (s) is/are provided with an inlet at the location of a free end of said wiper blade for allowing cleaning fluid to enter said cleaning fluid channel.

The present invention also refers to a method for manufacturing a windscreen wiper device of the flat blade type comprising an elastic, elongated carrier element, as well as an elongated wiper blade of a flexible material, which can be placed in abutment with a windscreen to be wiped, which wiper blade includes one central groove, in which groove a longitudinal strip of the carrier element is disposed, which windscreen wiper device comprises a connecting device for an oscillating arm, wherein said oscillating arm can be pivotally connected to said connecting device about a pivot axis near one end, and wherein said wiper blade includes a spoiler at a side of said central groove facing away from a windscreen to be wiped, as well as a wiping lip at a side of said central groove facing towards a windscreen to be wiped, characterized in that said wiper blade is made in one piece of elastomeric material, wherein said wiper blade comprises at least one longitudinal cleaning fluid channel, as well as several holes spaced apart along at least a portion of a length of said wiper blade, and wherein said holes extend obliquely in downward direction from said cleaning fluid channel to the outside for spraying cleaning fluid from said cleaning fluid channel through said holes onto a windscreen to be wiped, wherein said cleaning fluid channel is located inside a downstream sidewall of said central groove, and wherein said holes are provided at said sidewall, wherein said wiper blade (2) includes a spoiler (8) at a side of said cental groove (3) facing away from a windscreen to be wiped, wherein said spoiler (8) is provided with a recess (16) for accommodating said connecting device (6) therein, and wherein said connecting device (6) is provided with an inlet for allowing cleaning fluid to enter said cleaning fluid channel (10).

The invention will now be explained in more detail with reference to figures illustrated in a drawing, wherein:
- figure 1 is a perspective, schematic view of a windscreen wiper device in accordance with the invention;
- figure 2 is a perspective, schematic view of a wiper blade used in the windscreen wiper device of figure 1 according to a first unclaimed embodiment, together with a side view and a cross-sectional view along the line B-B thereof; and
- figures 3, 4 correspond to figure 2, but now relating to a second and third unclaimed embodiment of a wiper blade to be used in the windscreen wiper device of figure 1, respectively. The fourth embodiment depicted in figure 5 shows the invention.

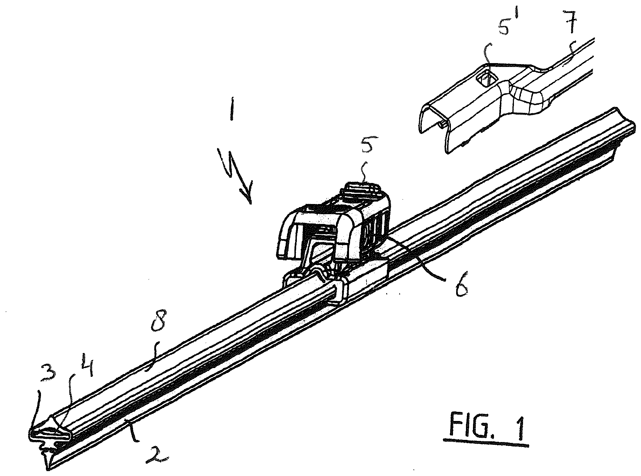

Figure 1 shows a preferred variant of a windscreen wiper device 1 according to the invention. Said windscreen wiper device 1 is built up of an elongated wiper blade 2 made of an elastomeric material. Said wiper blade 2 comprises a central longitudinal groove 3, in which a longitudinal strip 4 or flexor made of spring band steel is fitted. Said strip 4 forms a flexible carrier element for the rubber wiper blade 2, as it were, which is thus biased in a curved position (the curvature in operative position being that of a windscreen to be wiped). The windscreen wiper device 1 is further equipped with a connecting device 6 for an oscillating arm 7. In this respect use is made of a so-called bayonet connection wherein a resilient tongue 5 on the connecting device 6 is snapped in a corresponding shaped hole 5' in the oscillating arm 7.

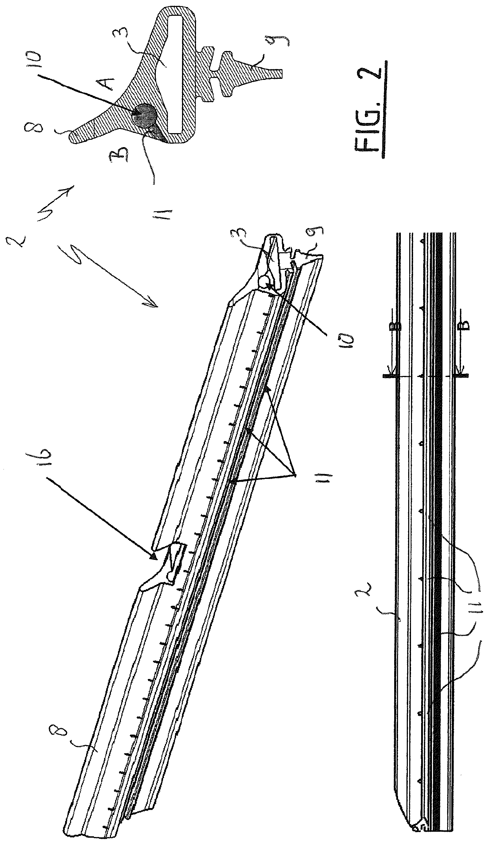

With reference to figure 2, said wiper blade 2 includes a spoiler 8 in one piece therewith at a side of said central groove 3 facing away from a windscreen to be wiped, as well as a wiping lip 9 at a side of said central groove 3 facing towards a windscreen to be wiped. As indicated earlier, said wiper blade 2 is made in one piece of elastomeric material through an extrusion process, preferably rubber, wherein said wiper blade 2 includes one longitudinal cleaning fluid channel 10, as well as several holes 11 spaced apart along at least a portion of a length of said wiper blade 2. Said holes 11 extend obliquely in downward direction from said cleaning fluid channel (10) to the outside for spraying cleaning fluid from said cleaning fluid channel through said holes 11 onto a windscreen to be wiped. As shown, said cleaning fluid channel 10 is located inside said spoiler 8 near a downstream side B thereof, wherein said holes 11 are also provided at said downstream side B of said wiper blade 2.

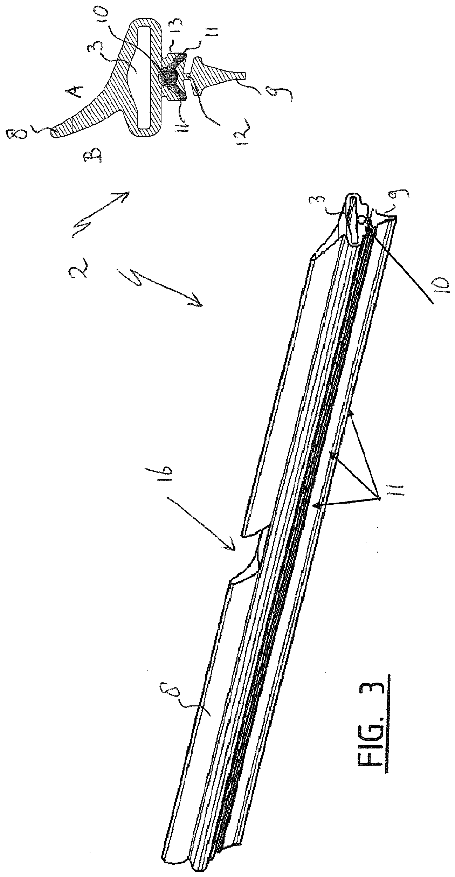

Figures 3, 4 and 5 correspond to figure 2, wherein corresponding parts have been designated with the same reference numerals.

As shown in figure 3, said cleaning fluid channel 10 is now located inside a part 13 of said wiper blade 2 that is connected with said wiping lip 9 through a tilting web 12. Said holes 11 are provided at a downstream side B and at an upstream side A of said part 13 of said wiper blade 2.

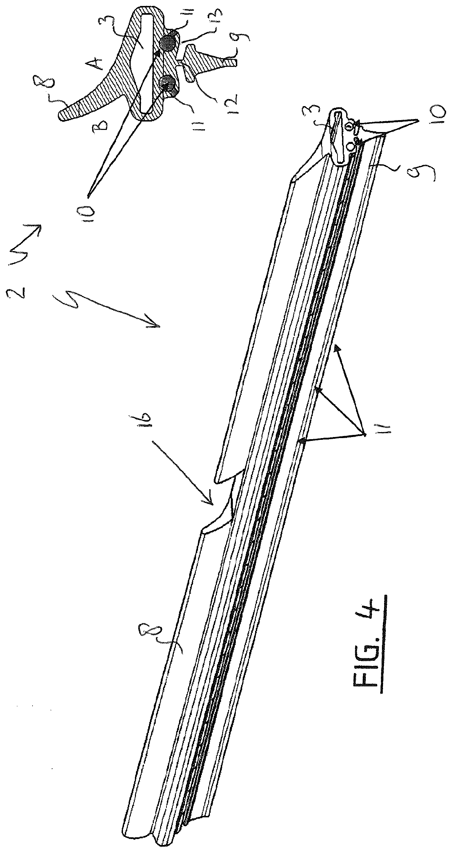

With reference to figure 4, two cleaning fluid channels 10 are now located inside said part 13 of said wiper blade 2 that is connected with said wiping lip 9 through said tilting web 12. The one cleaning fluid channel 10 is located near the downstream side B of said part 13 of said wiper blade 2, wherein the other cleaning fluid channel 10 is located near the upstream side of said part 13 of said wiper blade 2. Again, Said holes 11 are provided at a downstream side B and at an upstream side A of said part 13 of said wiper blade 2.

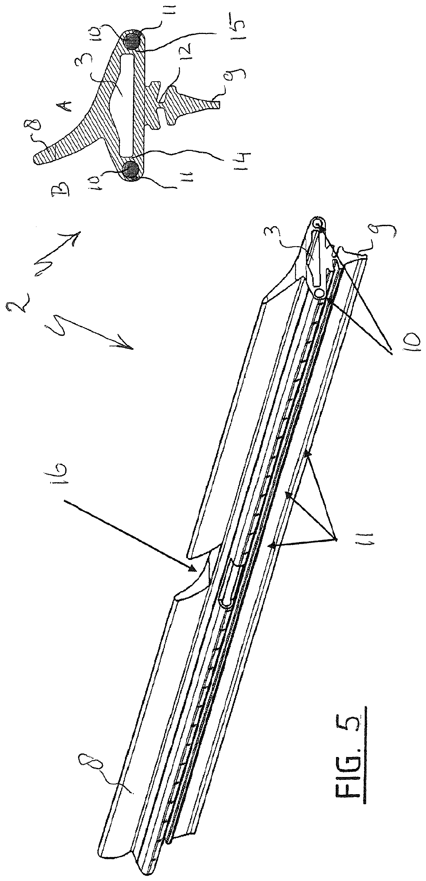

As depicted in figure 5, two cleaning fluid channels 10 are now again present, wherein the one cleaning fluid channel 10 is located inside said downstream sidewall 14 of said central groove 3, wherein the other cleaning fluid channel 10 is located inside an upstream sidewall 15 of said central groove 3. Said holes 11 are provided at said downstream sidewall 14 and at said upstream sidewall 15 of said central groove 3.

Said spoiler 8 is removed along a portion of the length of said wiper blade 2 at a distance from free ends of said wiper blade 2 facing said end caps 5, so as to form a longitudinal cut-out or recess 16. In case said connecting device 6 is provided with an inlet for allowing cleaning fluid to enter said cleaning fluid channel(s) 10, mounting of connecting device 6 into said recess 16 of said wiper blade 2 is arranged in such a manner that said inlet is in fluid connection with said cleaning fluid channel (10). Although not shown in figure 1, but fully understood by a skilled person, said oscillating arm 7 is connected to a mounting head fixed for rotation to a shaft driven by a small motor. In use, the shaft rotates alternately in a clockwise and in a counter-clockwise sense carrying the mounting head into rotation also, which in turn draws said oscillating arm 7 into rotation and by means of said connecting device 6 moves said wiper blade 2.

The invention is not restricted to the embodiments shown, but also extends to other preferred embodiments falling within the scope of the appended claims.

## Claims

1. A windscreen wiper device (1) of the flat blade type comprising an elastic, elongated carrier element, as well as an elongated wiper blade (2) of a flexible material, which can be placed in abutment with a windscreen to be wiped, which wiper blade (2) includes one central groove (3), in which groove (3) a longitudinal strip (4) of the carrier element is disposed, which windscreen wiper device (1) comprises a connecting device (6) for an oscillating arm (7), wherein said oscillating arm (7) can be pivotally connected to said connecting device (6) about a pivot axis near one end, and wherein said wiper blade (2) includes a wiping lip (9) at a side of said central groove (3) facing towards a windscreen to be wiped, wherein said wiper blade (2) is made in one piece of elastomeric material, wherein said wiper blade (2) comprises at least one longitudinal cleaning fluid channel (10), as well as several holes (11) spaced apart along at least a portion of a length of said wiper blade (2), **characterized in that** said holes (11) extend obliquely in downward direction from said cleaning fluid channel (10) to the outside for spraying cleaning fluid from said cleaning fluid channel through said holes (11) onto a windscreen to be wiped, wherein said cleaning fluid channel (10) is located inside a downstream sidewall (14) of said central groove (3), and wherein said holes (11) are provided at said sidewall (14), wherein said wiper blade (2) includes a spoiler (8) at a side of said cental groove (3) facing away from a windscreen to be wiped, wherein said spoiler (8) is provided with a recess (16) for accommodating said connecting device (6) therein, and wherein said connecting device (6) is provided with an inlet for allowing cleaning fluid to enter said cleaning fluid channel (10).

2. A windscreen wiper device (1) according to claim 1, wherein two cleaning fluid channels (10) are present, wherein the one cleaning fluid channel (10) is located inside said downstream sidewall (14) of said central groove (3), and wherein the other cleaning fluid channel (10) is located inside an upstream sidewall (15) of said central groove (3).

3. A windscreen wiper device (1) according to claim 2, wherein said holes (11) are provided at said downstream sidewall (14) and at said upstream sidewall (15) of said central groove (3).

4. A windscreen wiper device (1) according to any of the preceding claims 1 through 3, wherein said cleaning fluid channel (s) is/are provided with an inlet at the location of a free end of said wiper blade (2) for allowing cleaning fluid to enter said cleaning fluid channel (10).

5. Method for manufacturing a windscreen wiper device (1) of the flat blade type comprising an elastic, elongated carrier element, as well as an elongated wiper blade (2) of a flexible material, which can be placed in abutment with a windscreen to be wiped, which wiper blade (2) includes one central groove (3), in which groove (3) a longitudinal strip (4) of the carrier element is disposed, which windscreen wiper device (1) comprises a connecting device (6) for an oscillating arm (7), wherein said oscillating arm (7) can be pivotally connected to said connecting device (6) about a pivot axis near one end, and wherein said wiper blade (2) includes a wiping lip (9) at a side of said central groove (3) facing towards a windscreen to be wiped, wherein said wiper blade (2) is made in one piece of elastomeric material, wherein said wiper blade (2) is provided with at least one longitudinal cleaning fluid channel (10), as well as with several holes (11) spaced apart along at least a portion of a length of said wiper blade (2), **characterized in that** said holes (11) extend obliquely in downward direction from said cleaning fluid channel (10) to the outside for spraying cleaning fluid from said cleaning fluid channel through said holes (11) onto a windscreen to be wiped, wherein said cleaning fluid channel (10) is located inside a downstream sidewall (14) of said central groove (3), and wherein said holes (11) are provided at said sidewall (14), wherein said wiper blade (2) includes a spoiler (8) at a side of said cental groove (3) facing away from a windscreen to be wiped, wherein said spoiler (8) is provided with a recess (16) for accommodating said connecting device (6) therein, and wherein said connecting device (6) is provided with an inlet for allowing cleaning fluid to enter said cleaning fluid channel (10).

## Patentansprüche

1. Scheibenwischervorrichtung (1) des Flachblatttyps, umfassend ein elastisches, längliches Trägerelement sowie ein längliches Wischerblatt (2) aus einem flexiblen Material, das angrenzend an eine zu wischende Scheibe platziert werden kann, wobei das Wischerblatt (2) eine zentrale Nut (3) einschließt, wobei in der Nut (3) ein längslaufender Streifen (4) des Trägerelementes angeordnet ist, wobei die Scheibenwischervorrichtung (1) eine Verbindungsvorrichtung (6) für einen sich hin und her bewegenden Arm (7) umfasst, wobei der sich hin und her bewegenden Arm (7) schwenkbar um eine Schwenkachse nahe eines Endes mit der Verbindungsvorrichtung (6) verbunden sein kann und wobei das Wischerblatt (2) eine Wischlippe (9) an einer Seite der Mittelnut (3) einschließt, die einer zu wischenden Scheibe zugewandt ist, wobei das Wischerblatt (2) aus einem Stück aus Elastomermaterial hergestellt ist, wobei das Wischerblatt (2) wenigstens einen längslaufenden Reinigungsfluidkanal (10) sowie einige Löcher (11) umfasst, die entlang wenigstens eines Abschnitts einer Länge des Wischerblatts (2) voneinander beabstandet sind, **dadurch gekennzeichnet, dass** sich die Löcher (11) schräg in Abwärtsrichtung von dem Reinigungsfluidkanal (10) nach außen hin erstrecken zum Sprühen von Reinigungsfluid aus dem Reinigungsfluidkanal durch die Löcher (11) auf eine zu wischende Scheibe, wobei sich der Reinigungsfluidkanal (10) innerhalb einer stromabwärtigen Seitenwand (14) der zentralen Nut (3) befindet und wobei die Löcher (11) an der Seitenwand (14) bereitgestellt sind, wobei das Wischerblatt (2) einen Spoiler (8) an einer Seite der zentralen Nut (3) einschließt, abgewandt von einer zu wischenden Scheibe, wobei der Spoiler (8) mit einer Aussparung (16) zum darin Aufnehmen der Verbindungsvorrichtung (6) bereitgestellt ist, und wobei die Verbindungsvorrichtung (6) mit einem Einlass bereitgestellt ist, der dem Reinigungsfluid ermöglicht, in den Reinigungsfluidkanal (10) einzutreten.

2. Scheibenwischervorrichtung (1) nach Anspruch 1, wobei zwei Reinigungsfluidkanäle (10) vorhanden sind, wobei sich der eine Reinigungsfluidkanal (10) innerhalb der stromabwärtigen Seitenwand (14) der zentralen Nut (3) befindet, und wobei sich der andere Reinigungsfluidkanal (10) innerhalb einer stromaufwärtigen Seitenwand (15) der zentralen Nut (3) befindet.

3. Scheibenwischervorrichtung (1) nach Anspruch 2, wobei die Löcher (11) an der stromabwärtigen Seitenwand (14) und an der stromaufwärtigen Seitenwand (15) der zentralen Nut (3) bereitgestellt sind.

4. Scheibenwischervorrichtung (1) nach einem der vorhergehenden Ansprüche 1 bis 3, wobei der Reinigungsfluidkanal/die Reinigungsfluidkanäle mit einem Einlass an der Stelle eines freien Endes des Wischerblatts (2) bereitgestellt ist/sind, dem Reinigungsfluid zu ermöglichen, in den Reinigungsfluidkanal (10) einzutreten.

5. Verfahren zum Herstellen einer Scheibenwischervorrichtung (1) des Flachblatttyps, umfassend ein elastisches, längliches Trägerelement sowie ein längliches Wischerblatt (2) aus einem flexiblen Material, das angrenzend an eine zu wischende Scheibe platziert werden kann, wobei das Wischerblatt (2) eine zentrale Nut (3) einschließt, wobei in der Nut (3) ein längslaufender Streifen (4) des Trägerelementes angeordnet ist, wobei die Scheibenwischervorrichtung (1) eine Verbindungsvorrichtung (6) für einen sich hin und her bewegenden Arm (7) umfasst, wobei der sich hin und her bewegenden Arm (7) schwenkbar um eine Schwenkachse nahe eines Endes mit der Verbindungsvorrichtung (6) verbunden sein kann und wobei das Wischerblatt (2) eine Wischlippe (9) an einer Seite der Mittelnut (3) einschließt, die einer zu wischenden Scheibe zugewandt ist, wobei das Wischerblatt (2) aus einem Stück aus Elastomermaterial hergestellt ist, wobei das Wischerblatt (2) wenigstens mit einem längslaufenden Reinigungsfluidkanal (10) sowie einigen Löchern (11) bereitgestellt ist, die entlang wenigstens eines Abschnitts einer Länge des Wischerblatts (2) voneinander beabstandet sind, **dadurch gekennzeichnet, dass** sich die Löcher (11) schräg in Abwärtsrichtung von dem Reinigungsfluidkanal (10) nach außen hin erstrecken zum Sprühen von Reinigungsfluid aus dem Reinigungsfluidkanal durch die Löcher (11) auf eine zu wischende Scheibe, wobei sich der Reinigungsfluidkanal (10) innerhalb einer stromabwärtigen Seitenwand (14) der zentralen Nut (3) befindet und wobei die Löcher (11) an der Seitenwand (14) bereitgestellt sind, wobei das Wischerblatt (2) einen Spoiler (8) an einer Seite der zentralen Nut (3) einschließt, abgewandt von einer zu wischenden Scheibe, wobei der Spoiler (8) mit einer Aussparung (16) zum darin Aufnehmen der Verbindungsvorrichtung (6) bereitgestellt ist, und wobei die Verbindungsvorrichtung (6) mit einem Einlass bereitgestellt ist, der dem Reinigungsfluid ermöglicht, in den Reinigungsfluidkanal (10) einzutreten.

## Revendications

1. Dispositif d'essuie-glace (1) de type à balai plat comprenant un élément de support élastique allongé, ainsi qu'un balai d'essuie-glace allongé (2) réalisé avec un matériau flexible, qui peut être placé en butée avec un pare-brise à essuyer, ledit balai d'essuie-glace (2) comprend une rainure centrale (3), dans laquelle est disposée une bande longitudinale (4) de l'élément de support, ledit dispositif d'essuie-glace (1) comprend un dispositif de raccordement (6) pour un bras oscillant (7), dans lequel ledit bras oscillant (7) peut être raccordé de manière pivotante audit dispositif de raccordement (6) autour d'un axe de pivot à proximité d'une extrémité, et dans lequel ledit balai d'essuie-glace (2) comprend une lèvre d'essuyage (9) au niveau d'un côté de ladite rainure centrale (3) orientée vers un pare-brise à essuyer,
dans lequel ledit balai d'essuie-glace (2) est réalisé d'un seul tenant avec un matériau élastomère, dans lequel ledit balai d'essuie-glace (2) comprend au moins un canal de fluide de nettoyage longitudinal (10), ainsi que plusieurs trous (11) espacés le long d'au moins une partie d'une longueur dudit balai d'essuie-glace (2), **caractérisé en ce que** lesdits trous (11) s'étendent obliquement dans la direction descendante à partir dudit canal de fluide de nettoyage (10) jusqu'à l'extérieur pour pulvériser le fluide de nettoyage dudit canal de fluide de nettoyage à travers lesdits trous (11) sur un pare-brise à essuyer, dans lequel ledit canal de fluide de nettoyage (10) est positionné à l'intérieur d'une paroi latérale en aval (14) de ladite rainure centrale (3), et dans lequel lesdits trous (11) sont prévus au niveau de ladite paroi latérale (14), dans lequel ledit balai d'essuie-glace (2) comprend un déflecteur (8) au niveau d'un côté de ladite rainure centrale (3) orientée à l'opposée d'un pare-brise à essuyer, dans lequel ledit déflecteur (8) est prévu avec une cavité (16) pour y loger ledit dispositif de raccordement (6), et dans lequel ledit dispositif de raccordement (6) est prévu avec une entrée pour permettre au fluide de nettoyage d'entrer dans ledit canal de fluide de nettoyage (10).

2. Dispositif d'essuie-glace (1) selon la revendication 1, dans lequel deux canaux de fluide de nettoyage (10) sont présents, dans lequel un canal de fluide de nettoyage (10) est positionné à l'intérieur de ladite paroi latérale en aval (14) de ladite rainure centrale (3), et dans lequel l'autre canal de fluide de nettoyage (10) est positionné à l'intérieur d'une paroi latérale en amont (15) de ladite rainure centrale (3).

3. Dispositif d'essuie-glace (1) selon la revendication 2, dans lequel lesdits trous (11) sont prévus au niveau de ladite paroi latérale en aval (14) et au niveau de ladite paroi latérale en amont (15) de ladite rainure centrale (3).

4. Dispositif d'essuie-glace (1) selon l'une quelconque des revendications 1 à 3, dans lequel ledit canal de fluide de nettoyage/lesdits canaux de fluide de nettoyage est/sont prévu(s) avec une entrée à l'emplacement d'une extrémité libre dudit balai d'essuie-glace (2) pour permettre au fluide de nettoyage d'entrer dans ledit canal de fluide de nettoyage (10).

5. Procédé pour fabriquer un dispositif d'essuie-glace (1) de type à balai plat comprenant un élément de support élastique, allongé, ainsi qu'un balai d'essuie-glace allongé (2) réalisé avec un matériau flexible, qui peut être placé en butée contre un pare-brise à essuyer, lequel balai d'essuie-glace (2) comprend une rainure centrale (3), dans laquelle rainure (3), est disposée une bande longitudinale (4) de l'élément de support, le dispositif d'essuie-glace (1) comprend un dispositif de raccordement (6) pour un bras oscillant (7), dans lequel ledit bras oscillant (7) peut être raccordé, de manière pivotante, audit dispositif de raccordement (6) autour d'un axe de pivot à proximité d'une extrémité, et dans lequel ledit balai d'essuie-glace (2) comprend une lèvre d'essuyage (9) au niveau d'un côté de ladite rainure centrale (3) orientée vers un pare-brise à essuyer,
dans lequel ledit balai d'essuie-glace (2) est réalisé d'un seul tenant avec un matériau élastomère, dans lequel ledit balai d'essuie-glace (2) est prévu avec au moins un canal de fluide de nettoyage longitudinal (10), ainsi que plusieurs trous (11) espacés le long d'au moins une partie d'une longueur dudit balai d'essuie-glace (2), **caractérisé en ce que** lesdits trous (11) s'étendent obliquement dans la direction descendante à partir dudit canal de fluide de nettoyage (10) vers l'extérieur pour pulvériser le fluide de nettoyage à partir dudit canal de fluide de nettoyage à travers lesdits trous (11) sur un pare-brise à essuyer, dans lequel ledit canal de fluide de nettoyage (10) est positionné à l'intérieur d'une paroi latérale en aval (14) de ladite rainure centrale (3), et dans lequel lesdits trous (11) sont prévus au niveau de ladite paroi latérale (14), dans lequel ledit balai d'essuie-glace (2) comprend un déflecteur (8) au niveau d'un côté de ladite rainure centrale (3) orienté à l'opposé d'un pare-brise à essuyer, dans lequel ledit déflecteur (8) est prévu avec une cavité (16) pour y loger ledit dispositif de raccordement (6), et dans lequel ledit dispositif de raccordement (6) est prévu avec une entrée pour permettre au fluide de nettoyage d'entrer dans ledit canal de fluide de nettoyage (10).
